## Europäisches Patentamt

**European Patent Office**

**Office européen des brevets**

(19)

(11) Numéro de publication: **0 152 130**
**B1**

(12) **FASCICULE DE BREVET EUROPEEN**

(45) Date de publication du fascicule du brevet: **07.11.90**

(21) Numéro de dépôt: **85200066.0**

(22) Date de dépôt: **23.01.85**

(51) Int. Cl.⁵: **B 29 C 67/22,** B 68 G 7/00, A 47 C 7/18 // B29L31:58

(54) **Procédé pour la réalisation d'un coussin pour surface de siège ou dossier de siège de véhicules automobiles ou applications similares.**

(30) Priorité: **31.01.84 IT 8551484**

(43) Date de publication de la demande:
**21.08.85 Bulletin 85/34**

(45) Mention de la délivrance du brevet:
**07.11.90 Bulletin 90/45**

(84) Etats contractants désignés:
**AT BE CH DE FR GB IT LI LU NL SE**

(56) Documents cités:
**DE-A-1 778 534**
**FR-A-2 510 471**
**GB-A-2 063 065**
**US-A-3 161 436**
**US-A-3 287 748**

**Norme UNI no. 6353**

(73) Titulaire: **CLERPREM S.r.l.**
**Zona Industriale Ovest**
**I-36010 Carre' (Vicenza) (IT)**

(72) Inventeur: **Carussi, Paolo**
**Via Monte Ortigara 24**
**I-36010 Carre' (Vicenza) (IT)**
Inventeur: **Terreni, Paolo**
**Località Pra Secco**
**I-36010 Carre' (Vicenza) (IT)**

(74) Mandataire: **Bettello, Luigi, Dott. Ing.**
**Via Col d'Echele, 25**
**I-36100 Vicenza (IT)**

Courier Press, Leamington Spa, England.

## Description

La présente invention concerne une procédé pour la réalisation d'un coussin selon le préamble de la revendication 1 et un coussin pour surface de siège ou donies de siège de véhicules automobiles on application similairs selon le préambule de la revendication 2.

La présente invention a pour objet un procédé propre à permettre de réaliser un rembourrage ou coussin pour sièges d'automobiles ou applications analogues, dont la structure présente une portance différenciée propre à l'obtention d'un bon maintien latéral et d'un confort de siège agréable sans devoir recourir à des structures de support du type métallique ou du type à ressorts comme on le fait à l'heure actuelle.

On sait que les rembourrages ou coussins pour surfaces de siège ou dossiers réalisés en polyuréthane expansé moulé à chaud ou à froid ou découpé dans un bloc doivent nécessairement présenter une valeur adéquate de la caractéristique mécanique connue sous le nom de "portance"; celle-ci représente la capacité de résistance à la compression sous l'effet d'une charge appliquée de manière plus ou moins bien répartie.

Pour satisfaire cette exigence on utilise à l'heure actuelle des structures métalliques particulières qui, avec ou sans ressorts, sont susceptibles d'être incorporées dans la mousse de polyuréthane mais qui de toute façon sont très limitées quant à l'obtention du but qu'on s'est fixé, surtout en ce qui concerne la co-existence d'une portance satisfaisante et d'un bon effet tactile superficiel.

Du document US—A—3.161.436 est connu un procédé pour la réalisation d'un coussin pour surface de siège ou dossier de siège de véhicules automobiles ou applications similaires comportant deux couches de mousse à caractéristiques différentes, avec une couche intermédiaire en matériel non imperméable à la mousse.

Le procédé suivant l'invention a pour but de réaliser un coussin ou rembourrage qui ne nécessite aucune structure de support à ressorts, ni aucun insert métallique pour l'obtention d'un bon maintien latéral sur le coussin lui-même.

Le probleme est résolve par les caracteristiques des revendications 1 ou 2.

On rappellera qu'au cours du moulage à froid, l'introduction à l'intérieur du moule d'un matériau à basse densité et à cellules ouvertes ou partiellement ouvertes, suscite des problèmes dûs à l'absorption de mousse exercée par ledit matériau, en déterminant la formation de cavités superficielles ou de pellicules externes irrégulières et par là l'apparition de rebuts.

Pour surmonter ces inconvénients le présent procédé consiste à assembler:

A) Une partie externe qui présente le profil désiré pour le coussin et dont le volume est déterminé par le type de confort à obtenir, laquelle partie externe est réalisée avec les mousses spécifiques de polyuréthane du type à froid comportant des caractéristiques de souplesse et d'élasticité et dont les portances peuvent être de 10 à 50 kg par unité de surface normalisée (suivant les normes UNI N° 6353) et dont la densité en expansion libre peut être comprise entre 20 et 60 kg/m$^3$.

B) Une partie interne dont le volume peut varier en fonction du dessin et de la portance requise et qui est obtenue à l'aide d'une mousse expansée flexible de polyuréthane, polyether, polyester ou polychlorure de vinyle (PVC) ou encore de polyéthylène à structure cellulaire plus ou moins ouverte, présentant des caractéristiques différentes de la mousse utilisée pour la partie externe précitée et une densité propre à assurer les caractéristiques d'ensemble requises pour le coussin à réaliser.

C) Et une couche intermédiaire de séparation interposée entre les parties externe et interne précitées, réalisée en un non-tissé du type polyester, polyamide ou composition analogue, ou même d'une feuille plane traitée superficiellement avec un film de résine polyuréthane ou acrylique de grammage au moins égal à 10 g/m$^2$ appliqué par cylindrage ou par raclage de manière permanente et polymérisé à une température de l'ordre de 80°C.

En ce qui concerne la partie interne B) on a avantageusement recours à un polyuréthane expansé obtenu sous forme d'un bloc moyennant réaction de polyoléfines normales et de polyoléfines greffées, ces dernières en un pourcentage au plus égal à 40%. La forme de ce bloc n'est pas néccéssairement profilée.

Le film associé à la couche intermédiaire de séparation C) a pour but de maintenir de manière exacte la perméabilité de la surface de la feuille en non-tissé ou en fibres, afin de permettre la pénétration de la mousse de polyuréthane à froid dans la partie externe, en direction de la couche superficielle de la partie interne durant la phase de traitement dans le moule. L'insertion de la feuille ainsi traitée entre les parties externe et interne assure la liaison entre ces dernières et permet en outre au coussin réalisé de comporter une surface de réaction plus grande par rapport à celle qui est seulement intéressée par la charge déformante.

La mise en oeuvre de l'invention nécessite en outre la réalisation d'un moule de conformation qui comporte bien entendu des caractéristiques particulières par rapport à celles des moules actuellement utilisés pour le moulage normal de polyuréthane.

Le dessin annexé, donné à titre d'exemple, permettra de mieux comprendre l'invention, les caractéristiques qu'elle présente et les avantages qu'elle est susceptible de procurer:

Fig. 1 est une coupe du moule de réalisation suivant le plan indiqué en I—I en Fig. 3.

Fig. 2 est une coupe de ce moule suivant le plan indiqué en II—II en Fig. 3, le coussin étant représenté à l'intérieur dudit moule.

Fig. 3 est une vue en plan par dessus d'un coussin de surface de siège obtenu conformément au procédé suivant l'invention.

Fig. 4 montre en coupe ce coussin fini.

Fig. 5 et 6 sont des coupes analogues à celle de Fig. 4, mais correspondant à deux variantes de réalisation.

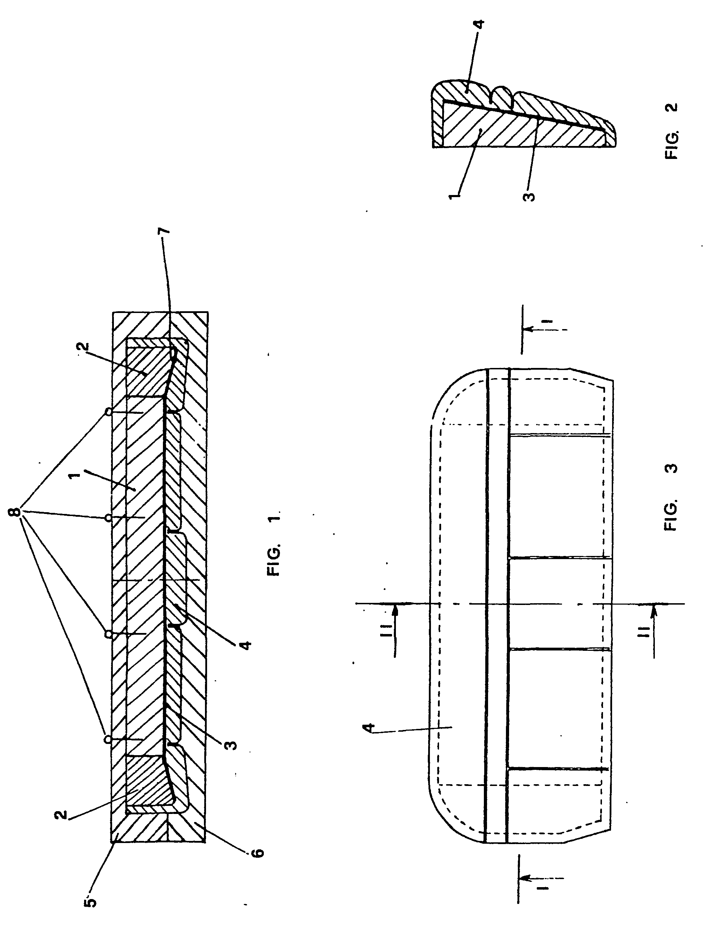

Comme montré en Fig. 1 à 4, un coussin obtenu par mise en oeuvre du procédé suivant l'invention comprend en combinaison une partie interne de base 1 obtenue par découpage d'un bloc de matière expansée à portance différenciée, deux parties latérales 2 elles-mêmes obtenues par découpage ou par moulage avec des caractéristiques très similaires, une couche intermédiaire de séparation 3 en non-tissé du genre sus-indiqué, et une partie externe 4 en mousse expansée présentant également les caractéristiques sus-exposées.

On notera que la couche en non-tissé 3 sépare nettement les parties référencées 1 et 4 alors qu'elle sépare de manière seulement partielle les parties latérales indiquées en 2, étant observé que les côtés peuvent avantageusement se compénétrer sans être séparés par la couche 3 sus-indiquée.

Le moule pour la réalisation du coussin suivant le procédé suivant l'invention a été représenté en coupe en Fig. 1 et l'on notera qu'il comprend une partie mobile 5 et une partie fixe 6 séparées l'une de l'autre par un joint 7 qui lors de la fermeture du moule assure une étanchéité parfaite.

Des épingles 8 soutiennent la partie 1 à l'intérieur du moule lorsque les parties 2 sont réalisées.

Comme on le comprend la disposition particulière de la couche de non-tissé 3 est propre à obtenir les buts qu'on s'est fixé, à savoir l'assemblage étroit des parties 1, 2 et 4 avec une absorption minimale de mousse afin de ne pas altérer les caractéristiques prévues à l'origine, cette disposition devant être calculée à chaque fois en fonction des rapports des volumes de la partie externe 4 et des parties intérieures 1 et 2.

Dans l'exemple de réalisation considéré au dessin, on a prévu une ou plusieurs parties latérales 2 dont le volume est déterminé par la nature du maintien latéral envisagé et par le dessin général du coussin lui-même. Ces éléments latéraux 2 peuvent être également obtenus en même temps que la phase de réalisation de la partie externe 4 à l'intérieur du moule, avec superposition d'un autre type de mousse présentant des caractéristiques différentes de celle utilisée pour la partie externe 4 et propres de ce fait à garantir la différenciation de portance par rapport aux parties 4 et 1.

Il est intéressant de prévoir une formulation de mousse à froid particulièrement étudiée pour obtenir une expansion contrôlée propre à éviter des pressions excessives à l'intérieur du moule, et l'on observera qu'une viscosité de mousse en fin d'expansion de 10 000 à 20 000 cps écarte le risque de pénétration excessive à l'intérieur du non-tissé.

Ce but est atteint moyennant emploi de polyoléfines à poids moléculaire de 6000, avec un pourcentage d'oxydriles primaires supérieur à 80% et de polyoléfines polymères suivant un pourcentage de 20 à 40%.

La catalyse est réalisée avec un mélange d'amines tertiaires équilibrées afin de garantir le profil désiré lors de l'augmentation de viscosité aux trois-quarts de l'expansion.

Selon différentes variantes de réalisation du procédé suivant l'invention, on prévoit que dans les parties du moule qui sont restées vides après introduction dans ledit moule des parties constituées par des blocs, on introduit par injection au moins deux parties en mousse présentant des caractéristiques différenciées, qui permettent d'améliorer encore le confort et l'agrément de l'ensemble.

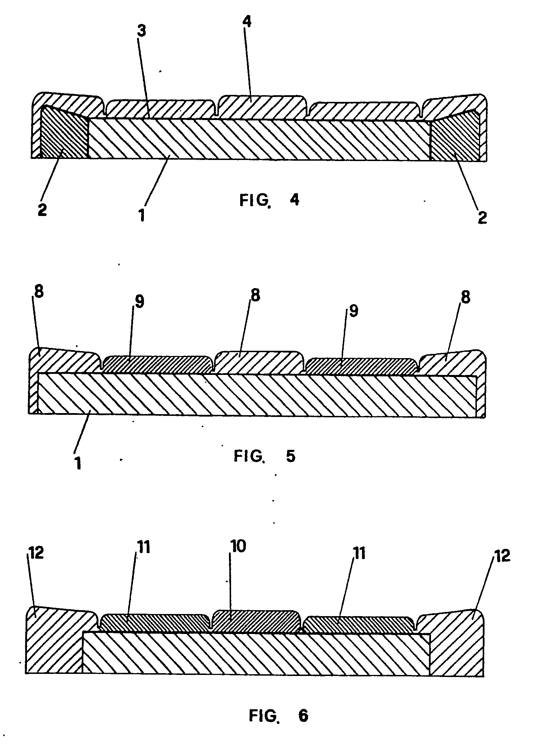

Par exemple dans la forme de réalisation de la surface de siège illustrée en Fig. 5, on prévoit que sur la partie interne de base 1 sont prévues par moulage deux parties 8 et 9 comportant des caractéristiques d'élasticité différentes, la partie 8 pouvant être plus rigide et la partie 9 plus molle.

Dans la variante représentée en Fig. 6 on prévoit que la zone centrale de la surface de siège 10 présente une portance différente de celle des parties intermédiaires 11 et des parties latérales 12 (11 pouvant être plus souples et 12 plus dures), étant observé que les parties intermédiaires 11 restent encore plus souples que la partie centrale 10 et que les parties latérales 12.

## Revendications

1. Procédé pour la réalisation d'un coussin pour surface de siége ou dossier de siège ou dossier de siège de véhicules automobiles ou applications similaires comportant deux couches de mousse à caractéristiques mécaniques différentes, caractérisé en ce qu'il consiste à introduire à l'intérieur de l'une des deux parties d'une moule une partie interne (1) en mousse expancée flexible en polyuréthane, polyether, polyester ou polychlorure de vinylle (PVC) ou encore en polyéthylène à structure cellulaire plus ou moins ouverte, présentant des caractéristiques mécaniques différentes de celles de la mousse utilisée pour la partie externe réalisée avec mousses spécifiques de polyuréthane du type à froid, comportant des caractéristiques de souplesse et d'élasticité et dont les portances peuvent être de 10 à 50 kg par unité de surface normalisée et dont la densité en expansion libre est comprise entre 20 et 60 kg/m³, convenablement fixée à l'une des parties précitées dudit moule etant disposée une couche intermédiaire (3) de séparation qui est interposée entre la partie externe et la partie interne surcitée, réalisée en non-tissé du type polyester, polyamide ou composition similaire, qui permette la pénétration de la mousse de polyuréthane polymérisée à froid dans la partie externe entre la couche superficielle de la partie interne, ce qui assure une bonne liaison entre les deux parties et avec des caractéristiques mécaniques préetablies, donnant lieu à une structure à portance differenciée, tandis qu'ils sont injecté des mousses dans les parties qui restent libres de la moule.

2. Coussin pour surface de siège ou dossier de siège de véhicules automobiles ou application similaires comportant deux couches de mousse à caractéristiques mécaniques differentes, avec une couche intermédiaire, selon la revendication 1, caractérisé en ce que la partie interne (1) en mousse expansée flexible en polyuréthane, polyether, polyester ou polychlorure de vinyle (PVC) ou encore en polyéthylène à structure cellulaire plus ou moins ouverte, présentant des caractéristiques mécaniques différentes de celles de la mousse utilisée pour la partie externe réalisée avec mousses specifiques de polyuréthane du type à froid, comportant des caractéristiques de souplesse et d'élasticité et dont les portances peuvent être de 10 à 50 kg par unité de surface normalisée et dont la densité en expansion libre est comprise entre 20 et 60 kg/m³, convenablement fixée à l'une des parties precitées dudit moule étant disposée sur une couche intermédiaire (3) de séparation qui est interposée entre la partie externe et la partie interne surcitée, réalisée en non-tissé du type polyester, polyamide ou composition similaire, qui permette la pénétration de la mousse de polyuréthane polymérisée à froid dans la partie externe entre la couche superficielle de la partie interne, ce qui assure une bonne liaison entre les deux parties et avec des caractéristiques mécaniques préetablies, donnant lieu à une structure à portance différenciée, tandis que sont injectés des mousses dans les parties qui restent libres dans le moule.

3. Coussin suivant la revendication 2, caractérisé en ce qu'il comprend en plus de la partie interne (1) au moins deux parties latérales (2) constituées par des blocs de matière expansée.

4. Coussin suivant la revendication 3, caractérisé en ce que les parties latérales (2) en matière plastique expansée sont aménagées en liaison avec la partie interne (1) afin de permettre la retenue de la surface de siège ou du dossier lorsque la charge qui agit sur ladite partie interne se déplace.

**Patentansprüche**

1. Verfahren zum Herstellen von Sitzoberflächen oder Rückenlehnen von Autositzen oder ähnliche Anwendungen, mit zwei Schaumstoffschichten unterschiedlicher mechanischer Eigenschaften, dadurch gekennzeichnet, daß in das Innere eines der beiden Teile einer Form ein Innenteil (1) aus expandiertem, flexiblem Schaumstoff aus Polyurethan, Polyäther, Polyester oder Polyvinylchlorid (PVC) oder noch aus Polyäthylen zellenförmige Struktur mit mehr oder weniger offenen Zellen eingesetzt wird, deren mechanischen Eigenschaften gegenüber denjenigen des für den Außenteil verwendeten Schaumstoffes, nämlich auf kaltem Wege hergestellten weichen und elastischen Polyurethan unterschiedlich sind und deren Auftrieb zwischen 10—50 kg pro normalisierte Oberflächeneinheit und der en Dichte bei freier Ausdehnung zwischen 20 und 60 kg/m³ liegen kann und daß an einer der beiden vorerwähnten Teile der Form in geeigneter Weise befestigt eine Zwischenschicht (3) als Trennschicht angeordnet ist, welche zwischen dem vorerwähnten Außenteil und dem Innenteil liegt und ein Nonwoven aus Polyester, Polyamid oder ein ähnlicher Stoff ist, welcher das Eindringen des auf kaltem Wege polymerisierten Polyurethan-Schaumstoffes in den äußeren Teil der Oberflächenschicht des inneren Teiles erlaubt derart, daß zwischen den beiden Teilen eine gute. Verbindung und vorbestimmte mechanische Eigenschaften sichergestellt sind und eine Struktur unterschiedlicher Auftriebe erreicht wird, während in die freien Teile der Form Schaumstoffe eingespritzt werden.

2. Sitzoberflächen oder Rückenlehnen von Autositzen oder ähnliche Anwendungen mit zwei Schaumstoffschichten unterschiedlicher mechanischer Eigenschaften sowie einer Zwischenschicht, nach A1 dadurch gekennzeichnet, daß der Innenteil, welcher aus expandiertem, flexiblem Schaumstoff aus Polyurethan, Polyäther, Polyester oder Polyvinylchlorid (PVC) oder noch aus Polyäthylen zellenförmiger Struktur mit mehr oder weniger offenen Zellen besteht, deren mechanischen Eigenshaften gegenüber denjenigen des für den Außenteil verwendeten Schaumstoffes, nämlich auf kaltem Wege hergestellten weichen und elastischen Polyurethan unterschiedlich sind und deren Auftrieb zwischen 10—50 kg pro normalisierte Oberflächeneinheit und deren Dichte bei freier Ausdehnung zwischen 20 und 60 kg/m³ liegen kann, mit an einer der beiden vorerwähnten Teile der Form in geeigneter Weise befestigten Zwischenschicht (3) als Trennschicht verbunden ist, welche zwischen dem vorerwähnten Außenteil und dem Innenteil liegt und ein Nonwoven aus Polyester, Polyamid oder ein ähnlicher Stoff ist, welcher das Eindringen des auf kaltem Wege polymerisierten Polyurethan-Schaumstoffes in den äußeren Teil der Oberflächenschicht des inneren Teiles erlaubt derart, daß zwischen den beiden Teilen eine gute Verbindung und vorbestimmte mechanische Eigenschaften sichergestellt sind und eine Struktur unterschiedlicher Auftriebe erreicht wird, während in die freien Teile der Form Schaumstoffe eingespritzt werden.

3. Sitzoberflächen oder Rückenlehnen nach Anspruch 2, dadurch gekennzeichnet, daß neben dem Innenteil (1) zumindest zwei Seitenteile (2) vorgesehen sind, welche aus Blöcken aus expandiertem Material bestehen.

4. Sitzoberflächen oder Rückenlehnen nach Anspruch 3, dadurch gekennzeichnet, daß die aus expandiertem Kunststoff bestehenden beiden Seitenteile (2) mit dem Innenteil (1) verbunden sind, um die Sitzoberfläche oder Rückenlehne dann festzuhalten, wenn sich die auf den Innenteil wirkende Last verschiebt.

**Claims**

1. Process for constructing a cushion for the surface of a seat or seat back, or a seat back on motor vehicles or similar applications, comprising two layers of foam with different mechanical properties, characterised by the fact that the invention consists in introducing inside one of the two parts of a mould an inner part (1) of flexible expanded polyurethane, polyether, polyester or polyvinylchloride (PVC) foam, or of cellular polyethylene of an open structure of varying degrees, with different mechanical properties from those of the foam used for the outer part produced with special cold-type polyurethane foams, comprising flexibility and elasticity characteristics with a lift factor of 10 to 50 kg per standard surface unit and with a free expansion density of between 20 and 60 kg/m$^3$, suitably fixed to one of the above-mentioned parts of the said mould, with an intermediate separating layer (3) inserted between the aforementioned outer and inner part, made of non-woven polyester, polyamide or similar composition, to permit penetration of the cold polymerised polyurethane foam into the outer part between the surface layer of the inner part, ensuring good adherence between the two parts with pre-established mechanical properties, to give a structure with different lift factors, with injection of foam into the remaining free parts of the mould.

2. Cushion for the surface of a seat or seat back, on motor vehicles or similar applications, comprising two layers of foam with different mechanical properties, with an intermediate layer as per Claim 1, characterised by the fact that the inner part (1) of flexible expanded polyurethane, polyether, polyester or polyvinylchloride (PVC) foam, or of cellular polyethylene of an open structure of varying degrees, with different mechanical properties from those of the foam used for the outer part produced with special cold-type polyurethane foams, comprising flexibility and elasticity characteristics with a lift factor of 10 to 50 kg per standard surface unit and with a free expansion density of between 20 and 60 kg/m$^3$, suitably fixed to one of the above-mentioned parts of the said mould, with an intermediate separating layer (3) inserted between the afore-mentioned outer and inner part, made of non-woven polyester, polyamide or similar composition, to permit penetration of the cold polymerised polyurethane foam into the outer part between the surface layer of the inner part, ensuring good adherence between the two parts with pre-established mechanical properties, to give a structure with different lift factors, with injection of foam into the remaining free parts of the mould.

3. Cushion as per Claim 2, characterised by the fact that, in addition to the inner part (1), it also comprises at least two side sections (2) formed by blocks of expanded material.

4. Cushion as per Claim 3, characterised by the fact that the side sections (2) of expanded plastic material are positioned so that they touch the inner part (1) to ensure that the surface of the seat or back holds when the load applied to the said inner part displaces.

FIG. 1

FIG. 2

FIG. 3

FIG. 4

FIG. 5

FIG. 6